Europäisches Patentamt

**European Patent Office**

Office européen des brevets

(11) Publication number: **0 221 764 B1**

## EUROPEAN PATENT SPECIFICATION

(45) Date of publication of patent specification: **08.01.92** (51) Int. Cl.5: **D01F 11/10**

(21) Application number: **86308403.4**

(22) Date of filing: **29.10.86**

(54) Metal-oxide coating for carbonaceous fibers.

(30) Priority: **31.10.85 US 793274**

(43) Date of publication of application:
**13.05.87 Bulletin 87/20**

(45) Publication of the grant of the patent:
**08.01.92 Bulletin 92/02**

(84) Designated Contracting States:
**DE FR GB**

(56) References cited:
FR-A- 2 027 513    GB-A- 1 320 908
US-A- 3 281 261    US-A- 4 376 803
US-A- 4 376 804    US-A- 4 540 675

CHEMICAL ABSTRACTS, vol. 94, no. 16, April 1981, page 75, abstract no. 122966f, Columbus, Ohio, US; I.N. ERMOLENKO et al.:
"Action of a low-temperature plasma on carbon fibrous materials containing zirconium dioxide", & IZV. AKAD. NAUK SSSR, NEORG. MATER. 1981, 17(1), 165-8

(73) Proprietor: **SULLIVAN MINING CORPORATION**
**3953 Oregon Street**
**San Diego California 92104(US)**

(72) Inventor: **Sullivan, Thomas Milton**
**3953 Oregon Street**
**San Diego California 92104(US)**

(74) Representative: **Wilson, Nicholas Martin et al**
**WITHERS & ROGERS 4 Dyer's Buildings Holborn**
**London EC1N 2JT(GB)**

## Description

This invention relates to carbonaceous fibres the properties of which are improved by the application of a metal-oxide coating.

## BACKGROUND OF THE INVENTION

In the past ten years, there has been a surge in the development of materials suitable for withstanding high temperatures, particularly those that are encountered in space reentry vehicles, rocket nozzles, turbines, internal combustion engines, and the like. Materials used for such applications should exhibit high-temperature strength and resistance to thermal shock, as well as the ability to resist abrasion. Two key properties that must be displayed by such materials are (1) resistance to chemical degradation, particularly oxidation and/or reduction at such temperatures, and (2) sufficient thermal conductivity to diffuse thermal stress. Materials that have considerable potential for high-temperature applications are ceramic or metal matrix composites. To date, however, neither type of composite has been developed with significant mechanical strength at temperatures much above 1200°C - 1400°C.

Considerable effort is presently being expended to extend the useful range of ceramic or metal matrix composites. One approach has been to reinforce composites with fibrous material. Lightweight carbonaceous fibers are particularly attractive because they can be fabricated in a wide variety of tensile strengths and moduli of elasticity. Moreover, the thermal conductivity of these fibers are superior, being eight times that of copper, and additionally exhibit a slightly negative coefficient of thermal expansion. While carbonaceous fibers such as carbon, carbide, or graphite have proven to increase the useful mechanical properties of resin matrix composites and some metal matrix composites, they nevertheless, do not confer stability much beyond 1500°C. In part, this is because the matrices of such composites readily oxidize or reduce carbonaceous fibers during composite fabricating. Fabrication is often at significantly higher temperatures than those compatible with otherwise useful fibers. Thus, carbonaceous fibers are of limited use in high-temperature applications because of the tendency of these fibers to deteriorate. For instance, graphite fibers can withstand temperatures approaching 2200°C in vacuum but oxidize readily in the air about 316°C. Unprotected graphite fibers at temperatures above 1350°C - 1500°C in a SiALON matrix are readily destroyed during composite fabrication.

Attempts at preventing the oxidation of carbonaceous fibers have met with limited success.

One approach has been to coat carbon fibres, intended to be used with magnesium as matrix material, with silicon dioxide, cf. US-A-4 376 803. Another approach has been to coat carbon fibers with silicon carbide, which in turn provides a secondary layer of silicon dioxide as a shield over the silicon carbide primary coating on carbon fiber. This feature works well at temperatures below 1200°C. Above this temperature, however, silicon dioxide undergoes a phase change, and there is a loss of protection for the underlying carbonaceous fiber. Considering the enhanced properties that ceramix or metal composite matrices reinforced with carbonaceous fibers display, it is particularly desirable to develop a process for protecting such fibers so that they are resistant to chemical destruction at high temperatures.

A property of carbonaceous fibers alluded to above is their superior thermal conductive nature. Ceramics reinforced with carbonaceous fibers enjoy improved resistance to thermo-mechanical shock, because the fibers conduct heat away from the site of impact. However, as noted above, at high temperatures carbonaceous fibers oxidize or reduce and consequently fiber reinforced ceramic composites in which they are incorporated undergo premature catastrophic failure. Thus, in order to take further advantage of carbonaceous fibers in fabricating fiber reinforced ceramic composites or metal matrix composites, it is desirable that methods of shielding the fibers from chemical degradation at high temperatures are developed.

## SUMMARY OF THE INVENTION

Accordingly in this invention there is provided carbonaceous fibers in contact with metal oxide characterised in that the metal oxide is selected from MgO, BeO, Group IIIA oxides excluding oxides of actinides with Atomic Numbers higher than 92, Group IIIB oxides excluding thallium oxide and boron oxide, and Group IVA oxides excluding titanium oxide, and forms a contiguous non-porous layer over said carbonaceous fibers whereby the fibers are capable of withstanding chemical degradation at temperatures greater than 1500°C and are capable for use with ceramic or metal matrices at said temperatures.

In this invention there is also provided a ceramic or metal matrix composite comprising metal oxide-coated carbonaceous fibers, and matrix material in contact with said metal oxide-coated carbonaceous fibers characterised in that the metal oxide is selected from MgO, Group IIIA oxides excluding oxides of actinides with Atomic numbers higher than 92, Group IIIB oxides excluding thallium oxide and borium oxide, and Group IVA oxides excluding titanium oxide and forms a contiguous non-porous layer over said carbonaceous fibers, the metal oxide-coated carbonaceous fibers occupy up to about 55% by volume of said ceramic or metal matrix composite, and the composite is capable of withstanding chemical degradation at temperatures greater than 1500°.

A method of making carbonaceous fibers is also provided in this invention, the method comprising providing said carbonaceous fibers with a coating of metal oxide characterised in that said metal oxide is selected from MgO, BeO, Group IIIA oxides excluding oxides of actinides with Atomic Numbers higher than 92, Group IIIB oxides excluding thallium oxide and borium oxide, and Group IVA oxides excluding titanium oxide, and forms a contiguous non-porous layer over said carbonaceous fibers, said coated fibers being capable of withstanding oxidation at temperatures greater than 1500°C and suitable for use in ceramic or metal matrix composites.

A coating is described whereby the advantages of using carbonaceous fibers in fabricating composites with ceramic or metal matrices can be fully realized. In order to prevent the oxidation of carbonaceous fibers and, additionally, enhance the structurally interactive properties of carbonaceous fibers with composite matrices at high temperatures, the fibres are coated with a thin layer of a suitable metal oxide. A variety of metal oxides can be used to coat carbonaceous fibers where the latter is carbon, graphite, or carbide, and where the ceramic or metal matrix is composed of a number of materials. Matrices can be composed of oxide, nitride, oxynitride, or carbonitride ceramic matrices or various metals.

Furthermore, metal oxide-coated carbonaceous fibers can, if required by the application envisioned for the fibers, be secondarily coated with a surface-active metal or dopant that enhances the wetting characteristics of the fiber and increases the interfacial bonding of the fibers with the matrix materials.

## DETAILED DESCRIPTION OF THE INVENTION

The subject invention metal oxide-coated carbonaceous fibers exhibit two key advantages over carbonaceous fibers shielded by other means: first, the fibers are practically impervious to oxidizing or reducing radicals at temperatures up to 2300°C; and, second, they provide a surface capable of intermediate interfacial bonding with matrix materials resulting in good composite translational strength. Carbonaceous fibers composed primarily of carbon, graphite, or carbide can be coated with a multiplicity of metal oxides. An example of a suitable carbide is silicon carbide, which can be obtained from Nippon Carbon Company of Japan, that produces either multifiber or monofiber material. Particularly useful metal oxides are MgO and BeO, as well as select oxides of metals derived from Groups IIIA, IIIB, and IVA of the Atomic Chart. An example of a Group IIIA metal oxide is yttria, which is particularly favored for its high-temperature stability.

It is anticipated that the minimum effective metal oxide-coating will be at about 25 nm, but thicker coatings of 100 nm or more will be preferred for use in particular instances, for example, in the fabrication of pressed fiber composites, or, alternatively, when the fabrication process itself dictates that the coating be significantly greater than the minimum effective thickness. Despite the 25 nm minimum effective coating thickness obtainable by manufacturing techniques well-known to those in the art, care should be taken to insure that the coating is contiguous over the fiber.

While carbonaceous fibers can be coated with a wide variety of metal oxides to form a chemical shield capable of preventing oxidation and/or reduction of the fibers, two factors will be determinative of the choice of metal oxide. Cost will be a consideration as the expense of different metal oxides differs widely. Another factor will be the interfacial bond lives between fiber and coating and between coating and matrix at expected service temperatures. For example, MgO is inexpensive and is stable in the presence of carbon and alumina at temperatures up to 1800°C. In contrast, BeO is expensive and toxic but stable at higher temperatures, up to about 2300°C. The Group IIIA metal oxide, thorium oxide, is similarly expensive and stable at temperatures about 2000°C, but radioactive. Thus, in those instances where metal oxide-coated carbonaceous fibers are sought to be employed in ceramic or metal matrices for applications at temperatures about 1800°C where cost is not a factor, BeO or thorium oxide might be preferred; whereas at temperatures below 1800°C, the more economical MgO might be the choice.

Several well-known techniques can be utilized for coating carbonaceous fibers. The preferable technique is chemical vapor deposition since this process can be carried out at temperatures that minimize heat dependent reactions between noncarbon constituents of the carbonaceous fibers and the metal oxides. Additionally, fibers can also be coated by first dissolving the metal oxide in a colloidal suspension wherein the suspension consist of a volatile solution that is contacted with the carbonaceous fiber, and, subsequently, the solution is volatilized leaving the metal oxide in place on the carbonaceous fiber. Another procedure that may be preferred in certain instances is to coat the carbonaceous fibers with metals directly and form the metal oxide by subsequent exposure to an oxidizing environment that forms the metal oxide but does not oxidize the underlying fiber. This procedure is described in U.S. Patent No. 3,736,109, particularly as applied to coating refractory metals such as MgO. Regardless of the procedure used, it is important to control the temperature so as not to oxidise the fiber prior to or during application of he metal oxide.

It is anticipated that metal-oxide coated carbonaceous fibers will be favorably employed in ceramic matrices consisting of materials that are well-known to those in the art and commonly used for fabricating ceramic composites. Particularly useful will be oxides, nitrides, oxynitrides, or carbonitrides. Generally, metal oxide coated carbonaceous fibers will make up to 55% by volume of the composite, though pressed fiber composites may benefit by having higher fiber amounts.

A variety of methods can be used to combine the metal-oxide-coated carbonaceous fibers with the ceramic matrix material. One method is by hot-pressing a mixture of carbonaceous fibers with matrix components. This procedure is described in U.S. Patent No. 4,314,852. It has the advantage of providing design flexibility in orienting the fibers; and, moreover, ceramic composites formed by this method are particularly well adapted to hot-pressing into desired shapes. Moreover, it can be carried out either under vacuum or in the presence of inert gases such as argon.

The following examples are presented to illustrate the invention.

EXAMPLE I

BeO-Coated Carbon Fiber Reinforced Ceramic composite

A layer of BeO approximately 250 angstroms in thickness was vapor deposited onto graphite fibers to produce fibers having a tensile strength of 1.725 x $10^9$ N/M$^2$ (250 X $10^3$psi) and a tensile modulus of 379.5 x $10^9$ N/M$^2$ (55 X $10^6$psi). Next, a fiber-reinforced ceramic composite was fabricated containing about 40% by volume BeO- coated graphite fibers and a composite matrix of about 99% alumina. Fabrication was by standard techniques. The compostie at 1500°C has a unidirectional composite translation strength of 487347 x $10^3$ N/M$^2$ (70,630psi) and a compressive strength of 966 x 105 N/M$^2$ (14,000psi). The density is 2.9 gram/cm$^3$ (0.1045 pounds per cubic inch).

EXAMPLE II

MgO-Coated Carbon Fiber Reinforced Ceramic Composites

The materials and methods used in this example, as well as the properties of the products, are the same as those of Example 1, with the exception that the carbon fibers were coated with MgO in lieu of BeO.

EXAMPLE III

Al$_2$O$_3$-Coated Carbon fiber Reinforced Metal Matrix Composites

Carbon fibers were coated with Al$_2$O$_3$ as in Example I. The fibers had a tensile strength of about 3.45 X $10^9$ N/M$^2$ (500 X $10^3$psi) and a tensile modulus of 231.15 X $10^6$ N/M$^2$ (33.5 X $10^6$psi). A metal matrix compsoite was fabricated using A l$_2$O$_3$-coated carbon fibers in an aluminum matrix. The fibers occupied about 50% of the composite by volume. The undirectional compsite strength translation was 1331.7 X $10^6$ N/M$^2$ (193,000psi).

**Claims**

1. Carbonaceous fibers in contact with metal oxide characterised in that the metal oxide is selected from MgO, BeO, Group IIIA oxides excluding oxides of actinides with Atomic Numbers higher than 92, Group IIIB oxides excluding thallium oxide and boron oxide, and Group IVA oxides excluding titanium oxide, and forms a contiguous non-porous layer over said carbonaceous fibers whereby the fibers are capable of withstanding chemical degradation at temperatures greater than 1500°c and are capable for use with ceramic or metal matrices at said temperatures.

2. Metal oxide coated carbonaceous fibers according to Claim 1 wherein said carbonaceous fibers are selected from carbide, graphite, or carbon.

3. Metal oxide-coated carbonaceous fibers according to Claim 2 wherein said carbides are selected from silicon carbide, tungsten carbide, niobium carbide, tantalum carbide, thorium carbide, uranium carbide, zirconium carbide, hafnium carbide, titanium carbide, boron carbide, beryllium carbide, vanadium carbide, and carbonitride compounds.

4. Metal oxide-coated carbonaceous fibers according to Claim 3 wherein said metal oxide contiguous layer has a minimum thickness of about 25 nm.

5. Metal oxide-coated carbonaceous fibers according to Claim 4 wherein said ceramic matrices are composed of materials selected from metal oxides, oxynitrides, nitrides, and carbonitrides.

6. Metal oxide-coated carbonaceous fibers according to Claim 4 wherein said metal matrix composite is composed of metals selected from Groups IA, IIA, IB, IIB, IIIA, IIIB, IVA, IVB, VA, VB, VIB, VIA, VIIA, VIIB, and VIII.

7. A ceramic or metal matrix composite comprising metal oxide-coated carbonaceous fibers, and matrix material in contact with said metal oxide-coated carbonaceous fibers characterised in that the metal oxide is selected from MgO, BeO, Group IIIA oxides excluding oxides of actinides with Atomic numbers higher than 92, Group IIIB oxides excluding thallium oxide and borium oxide, and Group IVA oxides excluding titanium oxide, and forms a contiguous non-porous layer over said carbonaceous fibers, the metal oxide-coated carbonaceous fibers occupy up to 55% by volume of said ceramic or metal matrix composite, and the composite is capable of withstanding chemical degradation at temperatures greater than 1500°c.

8. A ceramic or metal matrix composite according to Claim 7 wherein said metal oxide-coated carbonaceous fibers comprise a carbonaceous fiber in contact with about a 25-nm thick contiguous metal oxide layer.

9. A ceramic or metal matrix composite according to claim 8 wherein said carbonaceous fibers are selected from carbides, graphite, or carbon.

10. A ceramic or metal matrix composite according to Claim 9 wherein said carbides are selected from silicon carbide, tungsten carbide, niobium carbide, tantalum carbide, thorium carbide, uranium carbide, zirconium carbide, hafnium carbide, titanium carbide, boron carbide, beryllium carbide, vanadium carbide, and carbonitride compounds.

11. A ceramic or metal composite matrix according to claims 7 to 10 wherein said ceramic composite matrix is composed of materials selected from metal oxides, oxynitrides, nitrides, and carbonitrides.

12. A ceramic or metal composite matrix according to Claim 11 wherein said metal composite matrix is composed of materials selected from Groups IA, IIA, IB, IIB, IIIB, IIIA, IVA, IVB, VA, VB, VIB, VIA, VIIA, VIIB, and VIII.

13. A method of making carbonaceous fibers comprising providing said carbonaceous fibers with a coating of metal oxide characterised in that said metal oxide is selected from MgO, BeO, Group IIIA oxides excluding oxides of actinides with Atomic Numbers higher than 92, Group IIIB oxides excluding thallium oxide and borium oxide, and Group IVA oxides excluding titanium oxide, and forms a contiguous non-porous layer over said carbonaceous fibers, said coated fibers being capable of withstanding oxidation at temperatures greater than 1500°c and suitable for use in ceramic or metal matrix composites.

14. A method of making metal oxide-coated carbonaceous fibers according to Claim 13 wherein said carbonaceous fibers are selected from carbide, graphite, or carbon.

15. A method of making metal oxide-coated carbonaceous fibers according to claim 13 or claim 14, wherein said carbides are selected from silicon carbide, tungsten carbide, niobium carbide, tantalum carbide, thorium carbide, uranium carbide, zirconium carbide, hafnium carbide, titanium carbide, boron carbide, beryllium carbide, vanadium carbide and carbonitride compounds.

16. A method of making metal oxide-coated carbonaceous fibers according to any one of Claims 13 to 15, wherein said metal oxide forms a contiguous layer with a minimum thickness of about 25 nm.

17. A method of making metal oxide-coated carbonaceous fibers according to any one of Claims 13 to 16, wherein said coating of metal oxide on said carbonaceous fiber is provided by chemical vapor deposition.

18. A method of making metal oxide-coated carbonaceous fibers according to any one of Claims 13 to 17, wherein said ceramic matrix is composed of materials selected from metal oxides, oxynitrides, nitrides, and carbonitrides.

19. A method of making metal oxide-coated carbonaceous fibers according to Claim 18, wherein said metal matrix composite is composed of materials selected from Groups IA, IIA, IB, IIB, IIIB, IIIA, IVA, IVB, VA, VB, VIB, VIA, VIIA, VIIB, and VIII.

**Revendications**

1. Fibres carbonées en contact avec un oxyde métallique, caractérisées en ce que l'oxyde métallique est choisi parmi les oxydes du groupe IIIA,MgO, BeO, à l'exclusion des oxydes d'actinides ayant des nombres atomiques supérieurs à 92, les oxydes du groupe IIIB à l'exclusion de l'oxyde de thallium et de l'oxyde de bore et les oxydes du groupe IVA à l'exclusion de l'oxyde de titane, et forme une couche non poreuse contiguë par dessus lesdites fibres carbonées, grâce à quoi les fibres sont capables de résister à la dégradation chimique à des températures supérieures à 1.500°C et sont aptes à être utilisées avec des matrices céramique ou métal auxdites températures.

2. Fibres carbonées revêtues d'oxyde métallique suivant la revendication 1, caractérisées en ce que lesdites fibres carbonées sont choisies parmi le carbure, le graphite ou le carbone.

3. Fibres carbonées revêtues d'oxyde métallique suivant la revendication 2, caractérisées en ce que lesdits carbures sont choisis parmi le carbure de silicium, le carbure de tungstene, le carbure de niobium, le carbure de tantale, le carbure de thorium, le carbure d'uranium, le carbure de zirconium, le carbure d'hafnium, le carbure de titane, le carbure de bore, le carbure de beryllium, le carbure de vanadium et les composés carbonitrurés.

4. Fibres carbonées revêtues d'oxyde métallique suivant la revendication 3, caractérisées en ce que ladite couche contiguë d'oxyde métallique a une épaisseur minimum d'environ 25 nm.

5. Fibres carbonées revêtues d'oxyde métallique suivant la revendication 4, caractérisées en ce que lesdites matrices céramiques sont composées de matériaux choisis parmi les oxydes métalliques, les oxynitrures, les nitrures, et les carbonitrures.

6. Fibres carbonées revêtues d'oxyde métallique suivant la revendication 4, caractérisées en ce que ledit composite à matrice métallique est composé de métaux choisis parmi les groupes IA, IIA, IB, IIB, IIIA, IIIB, IVA, IVB, VA, VB, VIB, VIA, VIIA, VIIB, et VIII.

7. Composite à matrice céramique ou métal comprenant des fibres carbonées revêtues d'oxyde métallique et un matériau de matrice en contact avec lesdites fibres carbonées revêtues d'oxyde métallique, caractérisé en ce que l'oxyde métallique est choisi parmi les oxydes du groupe IIIA, BeO, MgO, à l'exclusion des oxydes d'actinides ayant un nombre atomique supérieur à 92, les oxydes du groupe IIIB à l'exclusion de l'oxyde de thallium et de l'oxyde de bore, et les oxydes du groupe IVA, à l'exclusion de l'oxyde de titane, et forme une couche non poreuse contiguë par-dessus lesdites fibres carbonées, les fibres carbonées revêtues d'oxyde métallique occupant jusqu'à 55% en volume dudit composite à matrice céramique ou métal, le composite étant apte à résister à la dégradation chimique à des températures supérieures à 1.500°C.

8. Composite à matrice céramique ou métal suivant la revendication 7, caractérisé en ce que lesdites fibres carbonées revêtues d'oxyde métallique sont constituées par une fibre carbonée en contact avec une couche contiguë d'oxyde métallique ayant une épaisseur d'environ 25 nm.

9. Composite à matrice céramique ou métal suivant la revendication 8, caractérisé en ce que lesdites fibres carbonées sont choisies parmi les carbures, les graphites ou le carbone.

10. Composite à matrice céramique ou métal suivant la revendication 9, caractérisé en ce que lesdits carbures sont choisis parmi le carbure de silicium, le carbure de tungstene, le carbure de niobium, le carbure de tantale, le carbure de thorium, le carbure d'uranium, le carbure de zirconium, le carbure d'hafnium, le carbure de titane, le carbure de bore, le carbure de beryllium, le carbure de vanadium, et les composés carbonitrurés.

11. Matrice céramique ou métal pour matériau composite suivant les revendications 7 à 10, caractérisée en ce que ladite matrice céramique pour matériau composite est composée de matières choisies parmi les oxydes métalliques, les oxynitrures, les nitrures, et les carbonitrures.

12. Matrice céramique ou métal pour matériau composite suivant la revendication 11, caractérisée en ce que ladite matrice en métal pour matériau composite est composée de matières choisies parmi les groupes IA, IIA, IB, IIB, IIIB, IIIA, IVA, IVB, VA, VB, VIB, VIA, VIIA, VIIB, et VIII.

13. Procédé de fabrication de fibres carbonées suivant lequel on dépose sur lesdites fibres carbonées un revêtement d'oxyde métallique, caractérisé en ce que ledit oxyde métallique est choisi parmi les oxydes du groupe IIIA, MgO, BeO, à l'exclusion des oxydes d'actinides ayant un nombre atomique supérieur à 92, les oxydes du groupe IIIB, à l'exclusion de l'oxyde de thallium et de l'oxyde de bore, et les oxydes du groupe IVA, à l'exclusion de l'oxyde de titane, et forme une couche non poreuse contiguë par-dessus lesdites fibres carbonées, lesdites fibres revêtues étant capables de résister à l'oxydation à des températures supérieures à 1.500°C et aptes à être utilisées dans des composites à matrice céramique ou métal.

14. Procédé de fabrication de fibres carbonées revêtues d'oxyde métallique suivant la revendication 13, caractérisé en ce que lesdites fibres carbonées sont choisies parmi le carbure, le graphite, ou le carbone.

15. Procédé de fabrication de fibres carbonées revêtues d'oxyde métallique suivant les revendications 13 ou 14, caractérisé en ce que lesdits carbures sont choisis parmi le carbure de silicium, le carbure de tungstène, le carbure de niobium, le carbure de tantale, le carbure de thorium, le carbure d'uranium, le carbure de zirconium, le carbure d'hafnium, le carbure de titane, le carbure de bore, le carbure de beryllium, le carbure de vanadium, et les composés carbonitrurés.

16. Procédé de fabrication de fibres carbonées revêtues d'oxyde métallique suivant l'une quelconque des revendications 13 à 15, caractérisé en ce que ledit oxyde métallique forme une couche contiguë avec une épaisseur minimum de 25 nm.

17. Procédé de fabrication de fibrees carbonées revêtues d'oxyde métallique suivant l'une qeulconque des revendications 13 à 16, caractérisé en ce que ledit revêtement d'oxyde métallique sur lesdites fibres carbonées est appliqué par déposition de vapeur chimique.

18. Procédé de fabrication de fibres carbonées revêtues d'oxyde métallique suivant l'une quelconque des revendications 13 à 17, caractérisé en ce que ladite matrice céramique est composée de matériaux choisis parmi les oxydes métalliques, les oxynitrures, les nitrures, et les carbonitrures.

19. Procédé de fabrication de fibres carbonées revêtues d'oxyde métallique suivant la revendication 18, caractérisé en ce que ladite matrice composite métal est composée de matériaux choisis parmi les groupes IA, IIA, IB, IIB, IIIB, IIIA, IVA, IVB, VA, VB, VIB, VIA, VIIA, VIIB, et VIII.

**Patentansprüche**

1. Kohlenstoffasern in Kontakt mit Metalloxid, dadurch **gekennzeichnet,** daß das Metalloxid ausgewählt ist aus MgO, BeO, Oxiden der Gruppe IIIA, abgesehen von Oxiden von Aktiniden mit Atomzahlen von größer als 92, Oxiden der Gruppe IIIB, abgesehen von Thalliumoxid und Boroxid, und Oxiden der Gruppe IVA, abgesehen von Titanoxid und eine angrenzende, nicht-poröse Schicht über den Kohlenstoffasern bildet, wodurch die Fasern die Fähigkeit haben, daß sie einem chemischen Abbau bei Temperaturen von größer als 1500°C standhalten können und die Fähigkeit haben, daß sie mit keramischen oder metallischen Grundmaterialien bei diesen Temperaturen eingesetzt werden können.

2. Mit Metalloxid beschichtete Kohlenstoffasern nach Anspruch 1, bei denen die Kohlenstoffasern ausgewählt sind aus Carbid, Graphit oder Kohlenstoff.

3. Mit Metalloxid beschichtete Kohlenstoffasern nach Anspruch 2, bei denen die Carbide ausgewählt sind aus Siliciumcarbid, Wolframcarbid, Niobcarbid, Tantalcarbid, Thoriumcarbid, Urancarbid, Zirkoncarbid, Hafniumcarbid, Titancarbid, Borcarbid, Berylliumcarbid, Vanadiumcarbid und Kohlenstoffnitridverbindungen.

4. Mit Metalloxid beschichtete Kohlenstoffasern nach Anspruch 3, bei denen die angrenzende Schicht aus Metalloxid eine minimale Dicke von etwa 25 nm hat.

5. Mit Metalloxid beschichtete Kohlenstoffasern nach Anspruch 4, bei denen die keramischen Grundmaterialien Materialien aufweisen, welche ausgewählt sind aus Metalloxiden, Oxynitriden, Nitriden und Kohlenstoffnitriden.

6. Mit Metalloxid beschichtete Kohlenstoffasern nach Anspruch 4, bei denen der metallische Grundmaterialverbund Metalle aufweist, die aus den Gruppen IA, IIA, IB, IIB, IIIA, IIIB, IVa, IVb, VA, VB, VIB, VIA, VIIB und VIII ausgewählt sind.

7. Keramischer oder metallischer Grundmaterialverbundstoff, welcher mit metalloxid-beschichtete Kohlenstoffasern und ein Grundmaterial in Kontakt mit den metalloxidbeschichteten Kohlenstoffasern aufweist, dadurch **gekennzeichnet**, daß das Metalloxid ausgewählt ist aus MgO, BeO, Oxiden der Gruppe IIIA, abgesehen von Oxiden von Aktiniden mit Atomzahlen von größer als 92, Oxiden der Gruppe IIIB, abgesehen von Thalliumoxid und Boroxid und Oxiden der Gruppe IVA, abgesehen von Titanoxid, und eine angrenzende nicht-poröse Schicht über den Kohlenstoffasern bildet, wobei die metalloxid-beschichteten Kohlenstoffasern bis zu 55 Vol.-% des keramischen oder metallischen Grundmaterialverbundstoffes einnehmen, und daß der Verbundstoff die Fähigkeit hat, daß er einem chemischen Abbau bei Temperaturen von größer als 1500° C standhalten kann.

8. Keramischer oder metallischer Grundmaterialverbundstoff nach Anspruch 7, bei dem die mit Metalloxid beschichteten Kohlenstoffasern eine Kohlenstoffaser aufweist, welche in Kontakt mit einer etwa 25 nm dicken, angrenzenden Metalloxidschicht ist.

9. Keramischer oder metallischer Grundmaterialverbundstoff nach Anspruch 8, bei dem die Kohlenstoffasern ausgewählt sind aus Carbiden, Graphit oder Kohlenstoff.

10. Keramischer oder metallischer Grundmaterialverbundstoff nach Anspruch 9, bei dem die Carbide ausgewählt sind aus Siliciumcarbid, Wolframcarbid, Niobcarbid, Tantalcarbid, Thoriumcarbid, Urancarbid, Zirkoncarbid, Hafniumcarbid, Titancarbid, Borcarbid, Berylliumcarbid, Vanadiumcarbid und Kohlenstoffnitridverbindungen.

11. Keramischer oder metallischer Grundmaterialverbundstoff nach den Ansprüchen 7 bis 10, bei dem der keramische Grundmaterialverbundstoff Materialien aufweist, die aus der Gruppe gewählt sind, welche Metalloxide, Oxynitride, Nitride und Kohlenstoffnitride unfaßt.

12. Keramischer oder metallischer Grundmaterialverbundstoff nach Anspruch 11, bei dem der metallische Grundmaterialverbundstoff Materialien aufweist, welche ausgewählt sind aus den Gruppen IA, IIA, IB, IIB, IIIB, IIIA, IVA, IVB, VA, VB, VIB, VIA, VIIA, VIIB und VIII.

13. Verfahren zum Herstellen von Kohlenstoffasern, bei dem die Kohlenstoffasern mit einer Beschichtung aus Metalloxid versehen werden, dadurch **gekennzeichnet,** daß das Metalloxid ausgewählt ist aus MgO, BeO, Oxiden der Gruppe IIIA, abgesehen von Oxiden von Aktiniden mit Atomzahlen von größer als 92, Oxiden der Gruppe IIIB, abgesehen von Thalliumoxid und Boroxid und Oxiden der Gruppe IVA, abgesehen von Titanoxid, und eine angrenzende, nicht-poröse Schicht über den Kohlenstoffasern bildet, wobei die beschichteten Fasern die Fähigkeit haben, daß sie einer Oxidation bei Temperaturen von größer 1500° C widerstehen und die Fähigkeit haben, daß sie in keramischen oder metallischen Grundmaterialverbundstoffen eingesetzt werden können.

14. Verfahren zum Herstellen von mit metalloxidbeschichteten Kohlenstoffasern nach Anspruch 13, bei dem die Kohlenstoffasern ausgewählt sind aus Carbid, Graphit oder Kohlenstoff.

15. Verfahren zum Herstellen von mit metalloxidbeschichteten Kohlenstoffasern nach Anspruch 13 oder Anspruch 14, bei dem die Carbide ausgewählt sind aus Siliciumcarbid, Wolframcarbid, Niobcarbid, Tantalcarbid, Thoriumcarbid, Urancarbid, Zirkoncarbid, Hafniumcarbid, Titancarbid, Borcarbid, Berylliumcarbid, Vanadiumcarbid und Kohlenstoffnitridverbindungen.

16. Verfahren zum Herstellen von metalloxid-beschichteten Kohlenstoffasern nach einem der Ansprüche 13 bis 15, bei dem das Metalloxid eine angrenzende Schicht mit einer minimalen Dicke von etwa 25 nm bildet.

17. Verfahren zum Herstellen von metalloxid-beschichteten Kohlenstoffasern nach einem der Ansprüche 13 bis 16, bei dem die Beschichtung aus Metalloxid auf der Kohlenstoffaser mittels chemischer Dampfablagerung vorgesehen wird.

18. Verfahren zum Herstellen von metalloxid-beschichteten Kohlenstoffasern nach einem der Ansprüche 13 bis 17, bei dem das keramische Grundmaterial Materialien aufweist, die aus der Gruppe gewählt sind, die Metalloxide, Oxynitride, Nitride und Kohlenstoffnitride umfaßt.

19. Verfahren zum Herstellen von metalloxid-beschichteten Kohlenstoffasern nach Anspruch 18, bei dem der metallische Grundmaterialverbundstoff Materialien aufweist, welche ausgewählt sind aus den Gruppen IA, IIA, IB, IIB, IIIB, IIIA, IVa, IVb, VA, VB, VIB, VIA, VIIA, VIIB und VIII.